# FASCICULE DE BREVET EUROPEEN

(11) **EP 1 100 698 B1**
(45) Date de publication et mention de la délivrance du brevet: **04.10.2006**
(21) Numéro de dépôt: 99934816.2
(22) Date de dépôt: 29.07.1999
(51) Int. Cl.: B60R 1/00

(54) **AGENCEMENT D'UN COUSSIN GONFLABLE POUR LA PROTECTION LATERALE D'UN PASSAGER DE VEHICULE AUTOMOBILE**
AIRBAGANORDNUNG ZUM KRAFTFAHRZEUGINSASSENSCHUTZ BEI SEITENAUFPRALL
AIRBAG ARRANGEMENT FOR LATERAL PROTECTION OF A MOTOR VEHICLE PASSENGER

(30) Priorité: 29.07.1998 FR 9809714
(43) Date de publication de la demande: 23.05.2001
(73) Titulaire: Renault s.a.s., 92100 Boulogne Billancourt (FR)
(72) Inventeur: PONCEAU, Philippe, F-78610 Le Perray en Yvelines (US)
(86) Numéro de dépôt international: PCT/FR1999/001884
(87) Numéro de publication internationale: WO 2000/006421

(56) Documents cités:
- WO-A-98/00316
- US-A- 5 273 309
- PATENT ABSTRACTS OF JAPAN vol. 016, no. 069 (M-1212), 20 février 1992 (1992-02-20) & JP 03 258636 A (MAZDA MOTOR CORP), 18 novembre 1991 (1991-11-18)
- PATENT ABSTRACTS OF JAPAN vol. 017, no. 324 (M-1433), 21 juin 1993 (1993-06-21) & JP 05 038993 A (TOYOTA MOTOR CORP), 19 février 1993 (1993-02-19)

## Description

L'invention concerne un agencement d'un coussin gonflable pour la protection d'un passager de véhicule automobile, notamment d'un passager localisé à proximité d'un coté de d'habitacle dudit véhicule.

De nombreux véhicules sont désormais équipés d'un coussin gonflable qui est agencé dans le volant du véhicule et qui se déploie en cas de choc frontal pour éviter que le conducteur, même retenu par un dispositif de ceinture de sécurité, ne puisse heurter le volant, notamment avec la tête. Certains véhicules sont également équipés d'un coussin gonflable destiné à protéger le passager avant, lequel coussin est alors généralement implanté dans la planche de bord du véhicule. De tels dispositifs sont connus du document US-A-5,273,309.

De même, les passagers arrière peuvent bénéficier du même degré de protection que les occupants avant du véhicule en cas de choc frontal.

II est aussi souhaitable que les passagers, et notamment les passagers arrière, puissent être protégés latéralement en cas de tonneau ou de choc latéral.

Cependant, l'implantation d'un coussin gonflable pour protéger latéralement les passagers n'est pas aisée.

Il est notamment nécessaire que le coussin de protection latérale se déploie en étant au plus près du flanc passager pour qu'il puisse jouer son rôle de protection le plus rapidement possible.

Afin d'assurer l'aménagement d'un tel coussin de protection latérale, il a déjà été proposé de le stocker dans la porte latérale adjacente du véhicule, ou dans le côté du dossier du siège du passager concerné. La place disponible dans la porte pour l'aménagement d'un tel coussin est réduite et le positionnement du coussin ne facilite pas son déploiement dans la zone de protection recherchée.

En ce qui concerne l'aménagement du coussin dans le dossier du siège, la conception de ce dernier est plus complexe et plus coûteuse et, lorsque le dossier est rabattable, le raccordement du coussin gonflable, avec ses moyens de gonflage automatique, aux moyens commandant le déclenchement de son gonflage s'en trouve compliqué.

Aussi, l'invention a pour objet de proposer un agencement d'un coussin gonflable pour la protection latérale d'un passager de véhicule automobile dont l'implantation soit aisée et permette le déploiement du coussin dans les meilleures conditions possibles.

A cette fin, l'invention présente les caractéristiques de la revendication 1.

Les revendications 2 et 3 décrivent des modes de réalisation de l'invention.

D'autres caractéristiques et avantages de l'invention apparaîtront à la lecture de la description détaillée qui suit pour la compréhension de laquelle on se reportera aux dessins annexés dans lesquels :
- la figure 1 est une vue latérale schématique d'un véhicule automobile dont les places latérales arrière sont équipées de coussins gonflables agencés conformément aux enseignements de l'invention ;
- la figure 2 est une vue schématique similaire à celle de la figure 1 sur laquelle un coussin gonflable est illustré en position déployée le long du passager arrière ;
- la figure 3 est une vue en perspective éclatée qui illustre en détail l'aménagement d'un coussin gonflable conforme aux enseignements de l'invention pour la protection du passager arrière latéral droit d'un véhicule automobile ;
- la figure 4 est une vue schématique en perspective d'un élément d'aménagement du logement de la caisse du véhicule lorsque celui-ci n'est pas équipé de coussins gonflables ;
- la figure 5 est une vue en perspective similaire à celle de la figure 3 sur laquelle le coussin gonflable est illustré en position déployée ; et
- la figure 6 est une vue schématique en section par un plan horizontal médian qui illustre le coussin gonflable en position stockée dans son logement du pied arrière droit du véhicule.

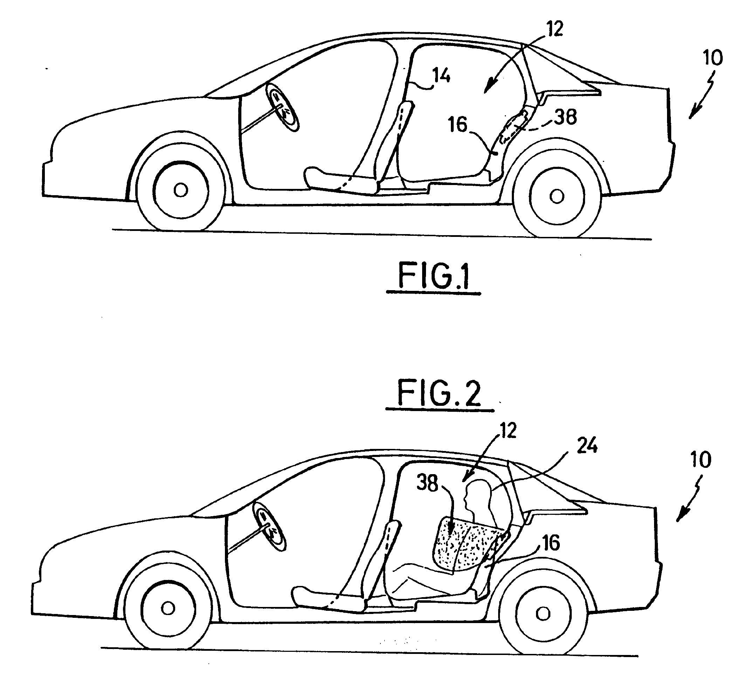

On a représenté, à titre d'exemple, sur les figures 1 et 2 un véhicule automobile 10 dont l'habitacle comporte deux ouvertures latérales 12, gauche et droite, permettant aux passagers d'accéder aux places arrière. L'invention peut être également appliquée sur un véhicule deux places, ou sur un véhicule du type coupé n'ayant pas d'ouverture d'accès aux places arrière. Dans le cas de l'utilisation d'une structure de véhicule comportant un pied milieu ayant une section de taille suffisante, le coussin gonflable pourra y être agencé conformément aux enseignements de l'invention, afin de protéger les passagers avants.

Selon une conception connue, l'ouverture 12 est délimitée verticalement par un pied structurel milieu 14 et par un pied sensiblement vertical arrière 16 qui sont deux éléments de structure latérale de la caisse du véhicule automobile.

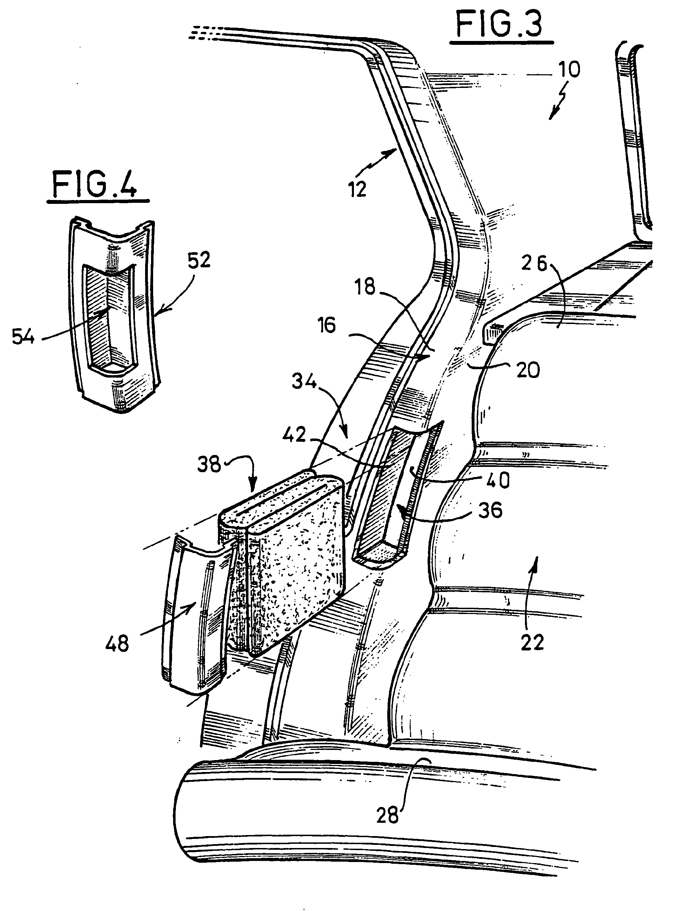

Le pied arrière 16 est donc un élément de tôlerie qui peut être revêtu d'un élément d'habillage qui en épouse sensiblement la forme et, comme on peut le voir notamment à la figure 3, il est délimité par une face transversale avant 18 et par une face latérale interne 20 d'orientation verticale et longitudinale, c'est-à-dire parallèle à l'axe général longitudinal du véhicule 10.

La place arrière 22 adjacente au pied arrière 16 comporte un siège pour qu'un passager 24 puisse s'asseoir à la place arrière droite et qui comporte un dossier sensiblement vertical 26 et un élément d'assise sensiblement horizontal 28.

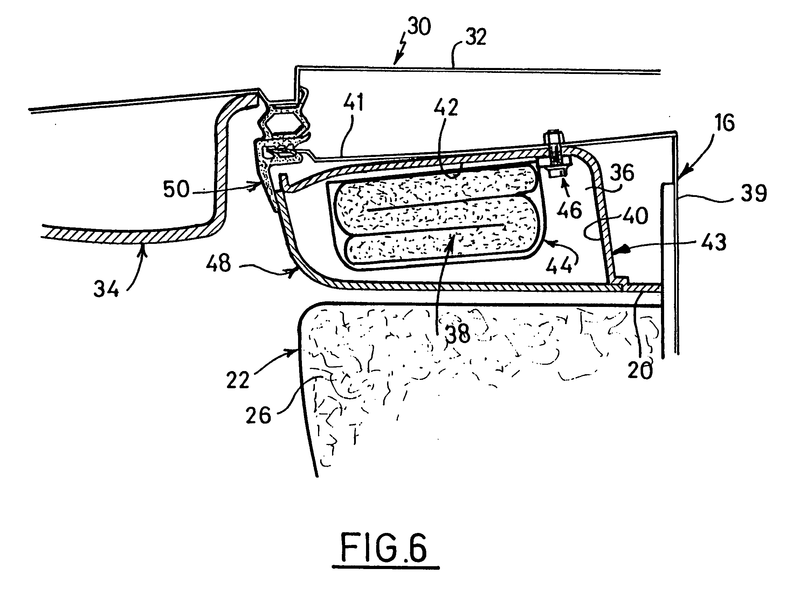

L'ouverture 12 est prévue pour être fermée par une porte latérale 30 articulée sur le pied milieu 14, qui est délimitée extérieurement par une peau de carrosserie 32 et qui est munie intérieurement par une garniture d'habillage 34 qui, dans la position fermée de la porte 30 illustrée à la figure 6, s'étend transversalement vers l'intérieur en partie en regard de la portion en vis-à-vis 34 du pied arrière 16.

Conformément aux enseignements de l'invention, est aménagé entre la structure du véhicule et le dossier 26 de siège, sensiblement à mi-hauteur dudit dossier 26, un logement 36 destiné à recevoir, en position stockée, un coussin gonflable ou "airbag" de protection latérale du passager 24. Le logement 36 est ouvert longitudinalement vers l'avant et transversalement, vers l'intérieur et il est délimité par une paroi verticale arrière d'orientation transversale 40 et par une paroi verticale latérale 42 d'orientation longitudinale.

Dans l'exemple représenté, les parois 40 et 42 appartiennent à un élément d'habillage 43 du pied arrière 16, mais elles pourraient être constituées directement par des plaques de tôle 39 et 41 constitutives de la structure du pied arrière 16.

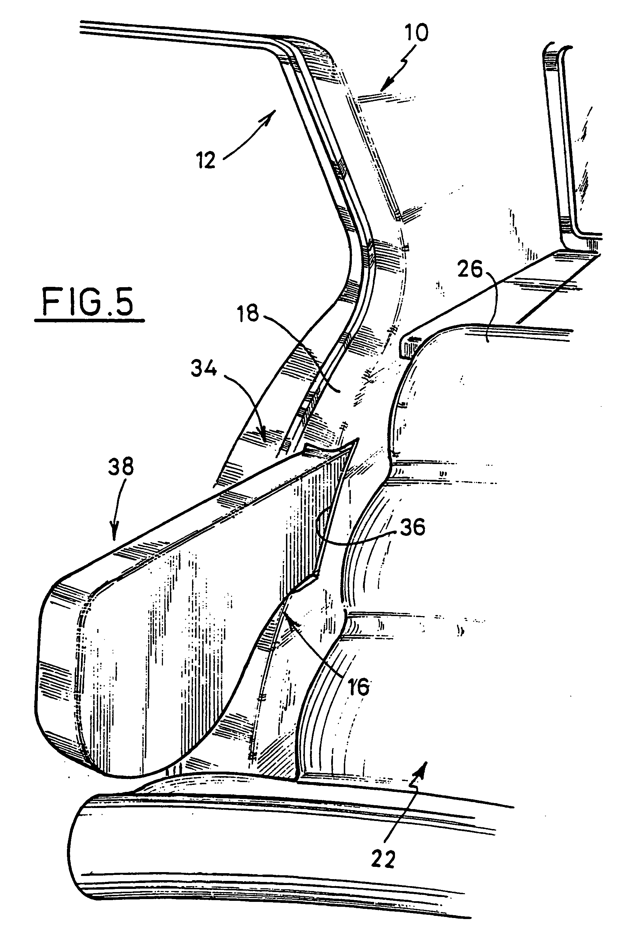

Le coussin gonflable 38 est, comme on peut le voir en position déployée notamment aux figures 2 et 5, un panneau vertical d'orientation générale longitudinale et d'épaisseur sensiblement constante en forme de matelas qui s'étend entre le flanc du passager 24 et la face latérale interne en vis-à-vis de la porte 30 contre laquelle il prend appui en position déployée.

L'agencement du logement 36 est tel que le coussin gonflable peut se déployer longitudinalement vers l'avant, hors dudit logement 36, en passant entre le côté latéral du dossier 26 du siège 22 et la face latérale interne 34 de la porte 30.

A son état de stockage, le coussin gonflable 38 se présente sous la forme d'un module 44 comportant par exemple une enveloppe susceptible de se déchirer pour le déploiement du coussin 38 et qui, avec ses moyens de gonflage automatique (non représentés), est un élément rapporté fixé par des moyens de type vis-écrou 46, par exemple, à l'intérieur du logement 36.

En position stockée dans son logement 36, et afin de le dissimuler pour conserver un bon aspect esthétique à l'intérieur du véhicule, le logement semi-ouvert 36 est fermé par un couvercle rapporté 48 de forme complémentaire de celle l'habillage 18 qui est par exemple retenu en position par un joint d'étanchéité 50 de manière à pouvoir s'escamoter automatiquement lors du déploiement du coussin gonflable 38.

Enfin, lorsque le logement 36 n'est pas équipé d'un coussin gonflable, en fonction des options retenues lors de l'achat du véhicule, le logement 36 peut constituer un vide-poches dont l'habillage est constitué par un élément rapporté 52, illustré à la figure 4 au dessus du couvercle 48, cet élément 52 de forme homologue de celle du couvercle 48 présentant un logement semi-ouvert formant vide-poches, ce logement pouvant être éventuellement fermé par une trappe articulée (non représentée).

## Revendications

1. Agencement d'un coussin gonflable (38) pour la protection latérale d'un passager de véhicule automobile (IO), du type dans lequel ledit coussin (38) est stocké dans un logement (36) du véhicule, à proximité du passager (24), et est destiné. à se déployer sensiblement parallèlement à l'axe longitudinal du véhicule de manière à se positionner au plus près du côté d'un passager adjacent à la caisse du véhicule, du type dans lequel le coussin gonflable (38) est monté rigidement, sur un élément fixe de la structure latérale (16) du véhicule, dans un logement (36) réalisé entre ledit élément fixe de la structure latérale (16) et un élément d'habillage (43), de ce dernier, qui comporte au moins une ouverture dirigée vers l'avant du véhicule et débouchant dans ledit logement,
**caractérisé en ce que** l'ouverture du logement (36) est obturée par un couvercle rapporté amovible automatiquement pour permettre le déploiement du coussin gonflable (38).

2. Agencement selon la revendication 1, **caractérisé en ce que** l'ouverture du logement (36) est obturée par un module de rangement, lorsque le coussin gonflable (38) n'est pas monté dans ledit logement (36).

3. Agencement selon l'une quelconque des revendications précédentes, **caractérisé en ce que** le logement (36) est délimité par au moins une paroi verticale arrière (40) d'orientation transversale et une paroi verticale latérale (42) d'orientation longitudinale.

## Claims

1. Airbag (38) arrangement for the lateral protection of a motor vehicle (10) passenger, of the type in which the said airbag (38) is stored in a housing (36) in the vehicle, close to the passenger (24), and is intended to inflate approximately parallel to the longitudinal axis of the vehicle in such a way as to position itself as close as possible to the side of a passenger adjacent to the vehicle body, of the type in which the airbag (38) is mounted rigidly on a fixed element of the lateral structure (16) of the vehicle, in a housing (36) formed between the said fixed element of the lateral structure (16) and a trim element (43) of the latter, which comprises at least one opening facing the front of the vehicle and opening into the said housing,
**characterized in that** the opening of the housing (36) is closed by a non-integral cover removable automatically to allow the airbag (38) to inflate.

2. Arrangement according to Claim 1, **characterized in that** the opening of the housing (36) is closed by a storage module when the airbag (38) is not mounted in the said housing (36).

3. Arrangement according to any one of the preceding claims, **characterized in that** the housing (36) is bounded by, as a minimum, a transversely oriented vertical rear wall (40) and a longitudinally oriented vertical lateral wall (42).

## Patentansprüche

1. Airbaganordnung (38) zum seitlichen Schutz eines Insassen eines Kraftfahrzeugs (IO), bei welcher der Airbag (38) in einer Aufnahme (36) des Fahrzeugs in der Nähe des Insassen (24) gelagert ist und sich vorwiegend parallel zur Längsachse des Fahrzeugs entfalten soll, sodass er sich so nah wie möglich an der an die Fahrzeug-Karrosserie angrenzenden Seite eines Insassen befindet, bei dem der Airbag (38) auf einem feststehenden Teil der Fahrzeug-Seitenstruktur (16) in einer Aufnahme (36) zwischen dem feststehenden Teil der Seitenstruktur (16) und einem Verkleidungsteil (43) derselben, das mindestens eine in Richtung Vorderseite des Fahrzeugs zeigende und in die Aufnahme mündende Öffnung aufweist, starr montiert ist,
**dadurch gekennzeichnet, dass** die Öffnung der Aufnahme (36) durch einen aufgesetzten Deckel verschlossen ist, der zum Entfalten des Airbags (38) automatisch lösbar ist.

2. Anordnung nach Anspruch 1, **dadurch gekennzeichnet, dass** die Öffnung der Aufnahme (36) durch ein Aufbewahrungsmodul verschlossen ist, wenn der Airbag (38) nicht in der Aufnahme (36) montiert ist.

3. Anordnung nach einem der vorhergehenden Ansprüche, **dadurch gekennzeichnet, dass** die Aufnahme (36) durch mindestens eine quer verlaufende senkrechte Rückwand (40) und eine längs verlaufende senkrechte Seitenwand (42) begrenzt ist.
